**Europäisches Patentamt**

**European Patent Office**

**Office européen des brevets**

(11) Veröffentlichungsnummer : **0 088 878**
**B1**

(12) # EUROPÄISCHE PATENTSCHRIFT

(45) Veröffentlichungstag der Patentschrift :
09.10.85

(51) Int. Cl.⁴ : **F 16 D 69/04**

(21) Anmeldenummer : **83101004.6**

(22) Anmeldetag : **03.02.83**

---

(54) **Bremsbelagträger in Scheibenbremsen.**

---

(30) Priorität : **11.03.82 DE 3208730**

(43) Veröffentlichungstag der Anmeldung :
**21.09.83 Patentblatt 83/38**

(45) Bekanntmachung des Hinweises auf die Patenterteilung : **09.10.85 Patentblatt 85/41**

(84) Benannte Vertragsstaaten :
**AT CH DE FR GB IT LI SE**

(56) Entgegenhaltungen :
**US-A- 3 605 967**

(73) Patentinhaber : **WABCO Westinghouse Fahrzeugbremsen GmbH**
**Am Lindener Hafen 21 Postfach 91 12 80**
**D-3000 Hannover 91 (DE)**

(72) Erfinder : **Feldmann, Joachim**
**Auf dem Papenberg**
**D-3052 Neustadt (DE)**
Erfinder : **Isernhagen, Fritz**
**Kleine Heide 56**
**D-3050 Wunstorf 1 (DE)**

(74) Vertreter : **Schrödter, Manfred**
**WABCO Westinghouse Fahrzeugbremsen GmbH Am Lindener Hafen 21 Postfach 91 12 80**
**D-3000 Hannover 91 (DE)**

## Beschreibung

Die Erfindung betrifft einen Bremsbelagträger in Scheibenbremsen, insbesondere in Vollbelag-Scheibenbremsen von Kraftfahrzeugen, gemäß dem Oberbegriff des Anspruchs 1.

Scheibenbremsen bestehen in der Regel aus einem aus mindestens einer Bremsscheibe gebildeten umlaufenden Teil und aus einem aus mindestens einem in Axialrichtung verschiebbaren Bremsbelagträger gebildeten und in Umlaufrichtung feststehenden Teil. Der Bremsbelagträger dient als Trägerelement für beim Bremsen mit der umlaufenden Bremsscheibe in Reibschgluß stehende Bremsbeläge.

Bei Vollbelag-Scheibenbremsen ist es üblich, den Bremsbelagträger in Segmente zu teilen, um bei einem evtl. Austausch der Bremsbeläge bei deren Verschleiß oder aus sonstigen Reparaturgründen die Montagearbeiten zu erleichtern. In der Regel bestehen die Bremsbelagträger aus zwei oder drei Segmenten, welche zusammengefügt den sogenannten Bremsring bilden.

Da die bei einer Bremsung auf die Bremsbelagträger-Segmente einwirkenden Kräfte ein Kippmoment um deren Aufhängung auslösen, hat es sich als zweckmäßig erwiesen, die Verbindungsflächen der Segmente untereinander als Überschneidungen oder sonstige formschlüssige Verbindungen auszubilden, die einerseits passgenau gefertigt sein müssen, um ein Kippen der Segmente weitgehend zu begrenzen und die andererseits eine einfache Demontage durch radiales Herausziehen gestatten müssen. Der Fertigungs- und Bearbeitungsaufwand für diese Verbindungsflächen ist sehr aufwendig. Die erwähnten Kippmomente bewirken insbesondere ein Kippen der Bremsbelagträger-Segmente um ihre Befestigungseinrichtung, d. h. um eine parallel zur Radachse verlaufende Achse.

Der Erfindung liegt deshalb die Aufgabe zugrunde, das bei Bremsungen durch Kippmomente ausgelöste Kippen der Bremsbelagträger-Segmente um eine parallel zur Radachse verlaufende Achse in deren Befestigungseinrichtung so zu reduzieren, daß die Segmente im Bereich ihrer gegenseitigen Verbindung nahezu kräftefrei bleiben und somit eine spezielle Bearbeitung der Verbindungsflächen nicht erforderlich ist.

Diese Aufgabe wird durch die im Patentanspruch 1 aufgeführte Erfindung gelöst.

Die Ausbildung und Anordnung der jedem Bremsbelagträger-Segment zugeordneten Bremsbeläge, welche derart erfolgt, daß die Wirklinie der von den Bremsbelägen auf das Bremsbelagträger-Segment übertragenen resultierenden Kraft durch den Bereich verläuft, in dem sich die Befestigungseinrichtung befindet, schafft die Voraussetzung dafür, daß das Bremsbelagträger-Segment nicht kippt, da in diesem Bereich keine oder nur minimale, parallel zur Radachse verlaufende Kippmomente auftreten. Die Bestimmung und Festlegung der erwähnten Wirklinie kann in üblicher Weise rechnerisch oder mittels geometrischem Verfahren erfolgen.

Vorteilhafte Weiterbildungen und Ausgestaltungen sind den Unteransprüchen zu entnehmen.

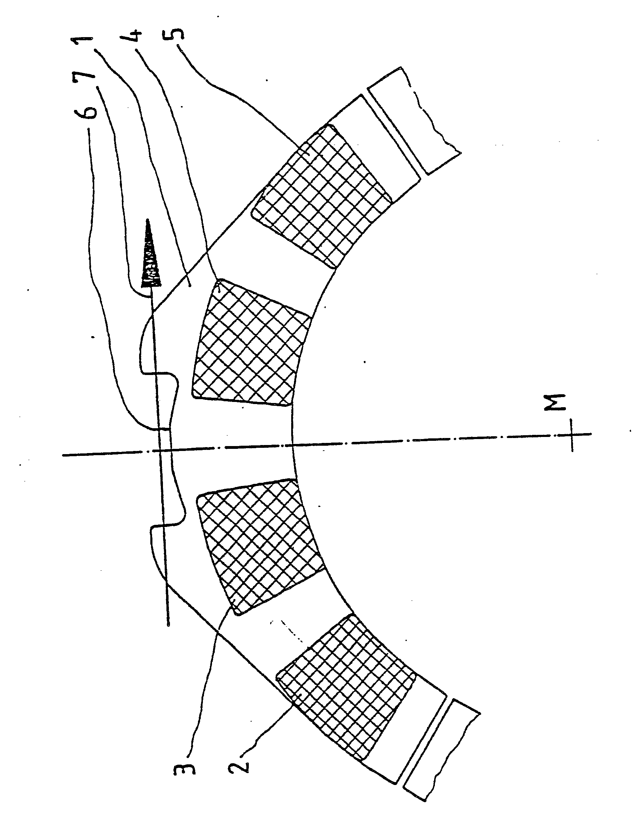

Die Erfindung wird nachfolgend anhand eines Ausführungsbeispiels, das in der Zeichnung dargestellt ist, näher erläutert.

Die Abbildung zeigt ein Bremsbelagträger-Segment 1, welches Teil eines aus drei Segmenten bestehenden Bremsringes ist und welches mit vier Bremsbelägen 2, 3, 4, 5 versehen ist. Es ist eine Befestigungseinrichtung 6 vorgesehen, die eine Befestigung des Bremsbelagträger-Segmentes 1 auf einem nicht dargestellten Befestigungselement der Scheibenbremse ermöglicht. Das Befestigungselement ist mit dem nicht drehbaren Teil der Scheibenbremse, insbesondere mit dem Bremsbetätigungselement der Scheibenbremse verbunden. Die erwähnte Befestigungseinrichtung 6 befindet sich in einem Bereich, in welchem die Wirklinie 7 der von den Bremsbelägen 2, 3, 4, 5 auf das Bremsbelagträger-Segment 1 übertragenen resultierenden Kraft verläuft. Das in der Zeichnung eingetragene Symbol M gibt die Lage der Radachse an, zu der die Achse, um welche durch Bremsungen Kippmomente an den Bremsbelagträger-Segmenten 1 ausgelöst werden, parallel liegt. Die im Ausführungsbeispiel symmetrische Ausgestaltung des Bremsbelagträger-Segmentes 1 ergibt auch eine symmetrische Anordnung der Bremsbeläge 2, 3, 4, 5.

Die beschriebene gegenseitige räumliche und funktionelle Zuordnung von Bremsbelägen und Befestigungseinrichtung ist auch ohne weiteres bei unsymmetrischen Bremsbelagträger-Segmenten erzielbar. Dies kann beispielsweise dann von Interesse sein, wenn man die Befestigungseinrichtung nicht mittig anbringen kann oder will.

Der Bremsbelag kann auch einteilig sein, wobei die Befestigungseinrichtung sich dann evtl. innerhalb der Teilringfläche des Bremsbelages befindet.

## Patentansprüche

1. Bremsbelagträger in Scheibenbremsen, insbesondere in Vollbelag-Scheibenbremsen von Kraftfahrzeugen, mit folgenden Merkmalen :

a) Der Bremsbelagträger besteht aus mehreren Bremsbelagträger-Segmenten (1) ;

b) die Bremsbelagträger-Segmente (1) sind je mit einem oder mehreren Bremsbelägen (2, 3, 4, 5) versehen ;

c) jedes Bremsbelagträger-Segment (1) weist eine Befestigungseinrichtung (6) auf, zur Befestigung der Bremsbelagträger-Segmente (1) an einem Befestigungselement, das seinerseits mit dem nicht drehbaren Teil der Scheibenbremse verbunden ist, gekennzeichnet durch folgende Merkmale :

d) die Bremsbeläge (2, 3, 4, 5) sind bei jedem Bremsbelagträger-Segment (1) so ausgebildet und so angeordnet, daß die Wirkungslinie (7) der von den Bremsbelägen (2, 3, 4, 5) auf das zugeordnete Bremsbelagträger-Segment (1) übertragenen resultierenden Kraft durch denjenigen Bereich des Bremsbelagträger-Segmentes (1) verläuft, in dem sich die Befestigungseinrichtung (6) befindet.

2. Bremsbelagträger nach Anspruch 1, dadurch gekennzeichnet, daß die Befestigungseinrichtung (6) aus einer Ausnehmung des Bremsbelagträger-Segmentes (1) besteht, die ein Befestigungselement aufnimmt.

3. Bremsbelagträger nach Anspruch 1 oder 2, dadurch gekennzeichnet, daß sich der Bereich des Bremsbelagträger-Segmentes (1), in dem sich die Befestigungseinrichtung (6) befindet, außerhalb der von den Bremsbelägen (2, 3, 4, 5) gebildeten Teilringfläche liegt.

## Claims

1. Brake-lining carrier for disc brakes, especially fully lined disc brakes for motor vehicles, having the following features :

a) the brake-lining carrier comprises a plurality of brake-lining carrier segments (1) ;

b) each of the brake-lining carrier segments (1) is provided with one or more brake-lining elements (2, 3, 4, 5) ;

c) each brake-lining carrier segment (1) has a securing device (6) for securing the brake-lining carrier segments (1) to a securing element which in turn is connected to the non-rotatable part of the disc brake, characterised by the following features :

d) the brake-lining elements (2, 3, 4, 5) are so designed and so arranged in the case of each brake-lining carrier segment (1) that the line of action (7) of the resultant force which is transferred by the brake-lining elements (2, 3, 4, 5) to the brake-lining carrier segment (1) associated therewith runs through that area of the brake-lining carrier segment (1) in which the securing device (6) is located.

2. Brake-lining carrier according to claim 1, characterised in that the securing device (6) consists of a recess in the brake-lining carrier segment (1) which accommodates a securing element.

3. Brake-lining carrier according to claim 1 or 2, characterised in that the area of the brake-lining carrier segment (1) in which the securing device (6) is located lies outside the arcuate surface defined by the brake-lining elements (2, 3, 4, 5).

## Revendications

1. Support de garniture de frein dans des freins à disques, en particulier dans des freins à disques à garniture circulaire ou totale de véhicules automobiles, ayant les particularités suivantes :

a) le support de garniture de frein est constitué de plusieurs segments porte-garnitures (1) ;

b) les segments porte-garnitures (1) sont pourvus chacun d'une ou de plusieurs garnitures de frein (2, 3, 4, 5) ;

c) chaque segment porte-garniture (1) présente un dispositif de fixation (6), pour fixer les segments porte-garnitures (1) à un élément de fixation qui est solidaire de la partie non tournante du frein à disque, caractérisé en ce que :

d) les garnitures de frein (2, 3, 4, 5) sont agencées et disposées, sur chaque segment porte-garniture (1) de manière que la ligne d'action (7) de la résultante des forces transmises par les garnitures (2, 3, 4, 5) au segment porte-garniture (1) passe par la région du segment porte-garniture 1 où se trouve le dispositif de fixation (6).

2. Support de garniture de frein selon la revendication 1, caractérisé en ce que le dispositif de fixation (6) est formé d'un évidement ménagé dans le segment porte-garniture (1) et recevant un élément de fixation.

3. Support de garniture de frein selon la revendication 1 ou 2, caractérisé en ce que la région du segment porte-garniture (1) où se trouve le dispositif de fixation (6) est située à l'extérieur de l'aire en partie d'anneau formée par les garnitures de frein (2, 3, 4, 5).